# EUROPEAN PATENT SPECIFICATION

(11) **EP 1 257 862 B1**
(45) Date of publication and mention of the grant of the patent: **27.05.2009**
(21) Application number: 01902572.5
(22) Date of filing: 01.02.2001
(51) Int. Cl.: G02B 7/00

(54) **WINDOW**
FENSTER
FENETRE

(30) Priority: 18.02.2000 ZA 200000800
(43) Date of publication of application: 20.11.2002
(73) Proprietor: DRUKKER INTERNATIONAL B.V., 5431 SH Cuijk (NL)
(72) Inventor: REIJNEN, Herman, Hubertus, Jacobus, NL-5447 PE Rijkevoort (NL); HALL, Clive, Edward, NL-5432 CB Cuijk (NL)
(74) Representative: Nicholls, Michael John
(86) International application number: PCT/IB2001/000119
(87) International publication number: WO 2001/061399

(56) References cited:
- EP-A- 0 761 623
- US-A- 3 205 764
- US-A- 4 004 151
- US-A- 4 669 818
- STROMBERG H D ET AL: "WINDOW CONFIGURATION FOR HIGH PRESSURE OPTICAL CELLS" REVIEW OF SCIENTIFIC INSTRUMENTS,AMERICAN INSTITUTE OF PHYSICS. NEW YORK,US, vol. 41, no. 12, December 1970 (1970-12), pages 1880-1881, XP000917581 ISSN: 0034-6748
- MARLEY N.A. ET AL: 'HIGH-TEMPERATURE AND-PRESSURE SYSTEM FOR LASER RAMAN SPECTROSCOPY OF AQUEOUS SOLUTIONS' REVIEW OF SCIENTIFIC INSTRUMENTS vol. 59, no. 10, 01 October 1988, pages 2247 - 2253, XP000008073
- STRYLAND J.C. ET AL: 'High-pressure optical cell for Raman scattering studies in solid hydrogen' REVIEW OF SCIENTIFIC INSTRUMENTS vol. 48, no. 10, October 1977, pages 1350 - 1351

## Description

This invention relates to windows and more particularly to diamond windows.

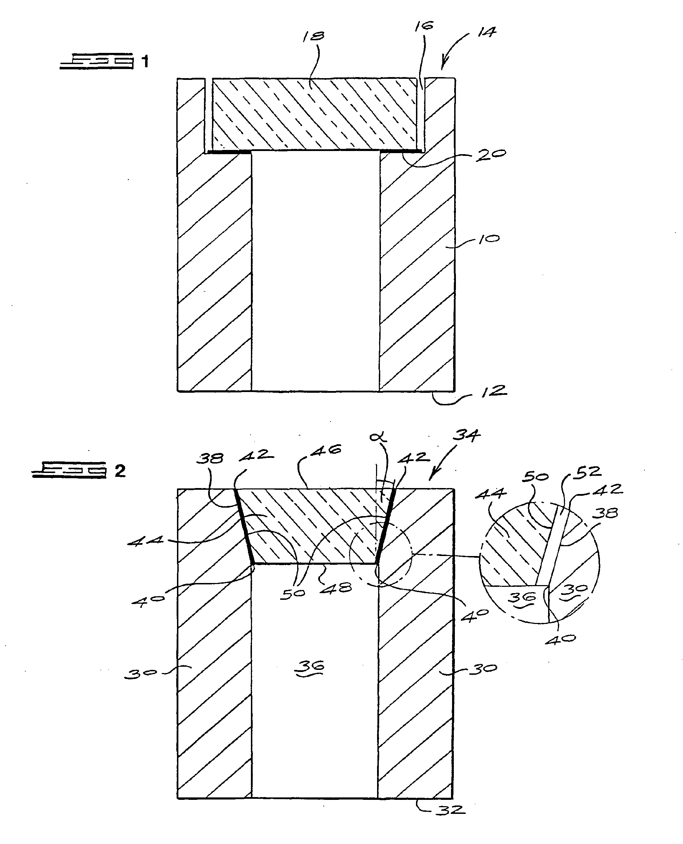

Diamond windows are used in a variety of sophisticated and high technology applications. For example, diamond windows are used as infrared windows for lasers and for process monitoring. In such applications, the diamond layer is generally mounted in a holder in a manner illustrated by Figure 1 of the accompanying drawings. Referring to this figure, a cylindrical holder 10 has an end 12 and an opposite end 14. The end 14 has a circular recess 16 formed therein. Located in the recess 16 is a layer 18 which may be made of diamond, sapphire or similar material. The layer 18 is held in position by means of bonding layer 20 which may be glue, solder, braze or other similar bonding material. This prior art method has the disadvantage that the diamond in the region of the bonding layer 20 is not utilised. This adds to the expense of the window because diamond is an expensive material. Further, diamond has a very low coefficient of thermal expansion and stresses can build up in the bonding layer or region.

MARLEY N A, et al.: "High-Temperature and-Pressure System for Laser Raman Spectroscopy of Aqueous Solutions" Review of Scientific Instruments, American Institute of Physics. New York, US, vol. 59, no. 10, October 1988, pages 2247-2253, XP000008073, ISSN: 0034-6748 discloses an optical cell used for high-pressure and-temperature studies. A titanium cell body is provided with an opening defined by a surface which slopes from one edge to an opposite edge. A truncated conical diamond is provided having an edge surface complemental with a conical seat in the form of an opening-defining surface of the cell body. The truncated conical diamond forms a window and is sealed into the matching conical seat of the cell body. A conical gold gasket is placed between the window and the titanium cell body to compensate for irregularities in the contact surfaces and to help to distribute the stress.

According to the present invention there is provided a method of producing a window comprising the steps of providing a metallic holder having an opening defined by a surface which slopes from one edge to an opposite edge, providing a layer of diamond, sapphire or like material having an edge surface complemental with an opening-defining surface of the holder, providing both of the complemental surfaces with a layer of bonding material selected from a braze, solder or a metal, introducing the layer of diamond, sapphire or like material into the opening such that the complemental surfaces complement each other, heating the holder and layer of diamond, sapphire or like material to cause the bonding material to melt and to cause the layer of bonding material to bond the complemental surfaces to each other and allowing the layer of diamond, sapphire or like material and the holder to cool resulting in the holder exerting a compressive force on the layer of diamond, sapphire or like material.

In the preferred embodiment hereinafter described, the holder has an internal passage which communicates with the opening, an edge is defined between the internal passage and the opening and the opening-defining surface slopes outwards from this edge.

The opening may have a central axis passing therethrough. Generally the opening-defining surface defines an angle of no more than 10° with the axis.

An example of a particularly suitable layer of metal for thermal compression bonding is gold.

The invention has particular application to windows in which the layer and the opening in which it is located are both of truncated cone shape.

The present invention will now be further described by way of example only, with reference to the accompanying drawings, in which:-
Figure 1 is a sectional side view of a window of the prior art, and
Figure 2 is a sectional side view of an embodiment of a window of the invention.

An embodiment of the invention will now be described with reference to Figure 2 of the accompanying drawings. Referring to this figure, a diamond window comprises a cylindrical holder 30 having ends 32 and 34. The end 34 has an opening formed therein. The opening is defined by a surface 3 8 which slopes outward from an inner edge 40 to an outer edge 42. The opening thus is of truncated cone shape. Located in the opening is a diamond layer 44 which has an outer surface 46 and an inner surface 48. The outer surface 46 and the inner surface 48 are joined by a sloping peripheral surface 50 which complements the opening-defining surface 38. The diamond layer 44 is also of truncated cone shape. The layer 44 is bonded to the holder 30 by means of a bonding layer 52.

In one example of the invention, the holder is made of steel. A layer of gold is deposited on the surface 38 and a layer of gold is deposited on the surface 50 of the diamond layer 44. The temperature is raised to a bonding temperature, typically 500°C. The thus coated diamond layer 44 is pushed into the opening of the holder such that the two layers of gold come into firm contact with each other. On cooling, the opening in the end 34 shrinks or reduces in size resulting in the holder exerting a compressive force on the diamond layer 44. A firm and effective bond between diamond layer and holder is achieved:

The angle α which the surfaces 38, 50 make with the vertical axis passing through the opening in the illustrated embodiment is 7°. This angle can be up to 40°, but is typically no more than 10°.

The diamond window illustrated in the embodiment of Figure 2 can be used in a variety of applications including applications which experience high temperature, high vacuum or high pressure, or applications which require a high degree of cleanness or chemical inertness. The diamond window has several advantages over the prior art windows such as a minimum wastage of diamond, a substantially reduced tensile strength in the diamond, and a substantially reduced shear strength at the joint between the diamond and holder.

It is well known that chemical vapour deposited diamond can have a higher tensile strength at the nucleation side than at the end growth side. In this case, a preferred mounting configuration would be to have the nucleation side in the mounted window where a higher tensile strength is encountered. Most often this is the outer surface 46 of the mounted window.

## Claims

1. A method of producing a window comprising the steps of providing a metallic holder (30) having an opening defined by a surface (38) which slopes from one edge (40) to an opposite edge (42), providing a layer (44) of diamond, sapphire or like material having an edge surface (50) complemental with the opening-defining surface (38) of the holder (30), providing both of the complemental surfaces with a layer of bonding material (52) selected from a braze, solder or a metal, introducing the layer of diamond, sapphire or like material into the opening such that the complemental surfaces complement each other, heating the holder (30) and layer (44) of diamond, sapphire or like material to cause the bonding material (52) to melt and to cause the layer of bonding material (52) to bond the complemental surfaces to each other and allowing the layer (44) of diamond, sapphire or like material and the holder to cool resulting in the holder (30) exerting a compressive force on the layer (44) of diamond, sapphire or like material.

2. A method according to claim 1, wherein the layer (44) is a diamond layer.

3. A method according to claim 1 or claim 2, wherein the bonding layer (52) is gold.

## Patentansprüche

1. Verfahren zun Herstellen eines Fensters, umfassend die folgenden Schritte: Bereitstellen eines metallischen Halters (30) mit einer Öffnung, die durch eine Oberfläche (38) definiert wird, welche schräg von einer Kante (40) zu einer gegenüberliegenden Kante (42) abfällt; Bereitstellen einer Schicht (44) aus Diamant, Saphir oder ähnlichem Material mit einer Kantenoberfläche (50), die komplementär zu der öffnungdefinierenden Oberfläche (38) des Halters (30) ist; Ausstatten von den beiden komplementären Oberflächen mit einer Schicht aus Bindemittel (52), ausgewählt aus einem Hartlot, einem Lötmittel oder einem Metall; Einführen der Schicht aus Diamant, Saphir oder ähnlichem Material in die Öffnung, so dass die komplementären Oberflächen einander ergänzen; Erhitzen des Halters (30) und der Schicht (44) aus Diamant, Saphir oder ähnlichem Material, um zu veranlassen, dass das Bindemittel (52) schmilzt, und um zu veranlassen, dass die Schicht aus Bindemittel (52) die komplementären Oberflächen miteinander verbindet; und Zulassen, dass sich die Schicht (44) aus Diamant, Saphir oder ähnlichem Material und der Halter abkühlen, was darin resultiert, dass der Halter (30) eine zusammendrückende Kraft auf die Schicht (44) aus Diamant, Saphir oder ähnlichem Material ausübt.

2. Verfahren nach Anspruch 1, in welchem die Schicht (44) eine Diamantschicht ist.

3. Verfahren nach Anspruch 1 oder Anspruch 2, in welche die Bindemittelschicht (52) Gold ist.

## Revendications

1. Procédé de fabrication d'une fenêtre comprenant les étapes consistant à fournir un support métallique (30) ayant une ouverture définie par une surface (38) qui est en pente d'un bord (40) à un bord opposé (42), fournissant une couche (44) de diamant, de saphir ou d'un matériau analogue ayant une surface de bord (50) complémentaire de la surface définissant l'ouverture (38) du support (30), à doter les deux surfaces complémentaires d'une couche de liant (52) sélectionné parmi une brasure, une brasure tendre ou un métal, à introduire la couche de diamant, de saphir ou d'un matériau analogue dans l'ouverture de sorte que les surfaces complémentaires se complètent l'une l'autre, à chauffer le support (30) et la couche (44) de diamant, de saphir ou d'un matériau analogue afin que le liant (52) fonde et provoque une liaison entre la couche de liant (52) et les surfaces complémentaires et à laisser la couche (44) de diamant, de saphir ou d'un matériau analogue et le support refroidir afin que le support (30) exerce une force de compression sur la couche (44) de diamant, de saphir ou d'un matériau analogue.

2. Procédé selon la revendication 1, dans lequel la couche (44) est une couche de diamant.

3. Procédé selon la revendication 1 ou la revendication 2, dans lequel la couche de liant (52) est de l'or.
